# EUROPEAN PATENT APPLICATION

(11) **EP 2 910 158 A1**
(43) Date of publication of application: **26.08.2015**
(21) Application number: 13849514.8
(22) Date of filing: 21.10.2013
(51) Int. Cl.: A47J 37/07

(54) **VERTICAL GRILL**

(30) Priority: 22.10.2012 ES 201231100; 20.09.2013 ES 201331085
(71) Applicant: Grill Irrintzi, S.L., 20140 Andoain (Gipuzkoa) (ES)
(72) Inventor: RUBIO GARCIA, Angel, E-20160 Lasarte-Oria (ES); RABANEDO SOUTO, Roberto, E-20140 Andoain (ES)
(74) Representative: Codoñer Molina, Vicente
(86) International application number: PCT/ES2013/070729
(87) International publication number: WO 2014/064316

(57) **Abstract**

The invention relates to a vertical grill formed by a metal cabinet (1, 25) in the form of a six-sided polyhedron with equal parallel faces, the grill (2, 19) being inserted via the front face (11, 24) carrying at least two guides (4, 23) fixed in the upper part of the cabinet (1, 25), along the upper face and inside, and a container (9, 20) being arranged below the cabinet (1, 25). The grill (2, 19) is a grating that has a preferably rectangular form divided into two equal parts the size of the largest faces of the cabinet (1, 25), that are connected by means of a hinge-type element on one end and by means of a handle (3, 18) on the opposite end, the heat source being arranged inside the cabinet (1, 25).

## Description

### Object of the invention

The present invention relates to a vertical grill.

### Background of the invention

Traditional grills are well known as being used for grilling particular types of food, they take the form of a grill that is placed over a fire or burning embers, with the food to be cooked placed on this grill. A problem arises when the oils or fats released by the food fall onto the fire or embers reigniting the flames and producing large volumes of smoke.

### Description of the invention

The invention described below solves the problems mentioned above by using minimal materials and guaranteeing maximum performance, convenience and safety.

The invention can be used in two ways; fixed in a specific location, or as a portable device that is easy to transport and set up for use. Both modes have similar conformational characteristics as well as their own special features, the main one being a difference in size.

The invention mainly consists of an oven formed by a metal cabinet and a grill basket. The cabinet has a polyhedral shape with six parallel sides, with the grill basket inserted through the front side.

The grill basket is a lattice, preferably rectangular, divided into two equally-sized parts, with the same dimensions as the largest sides of the cabinet, joined along one side by a type of hinge and with a handle on the opposite side to facilitate easy opening and closing, transportation and the introduction of the grill basket into the cabinet.

Beneath the grill basket, and forming part of the cabinet, there is a drawer-shaped receptacle where the oil and fat that is released from the food collects.

On the inside of the cabinet there are means for supporting the grill basket so that it hangs vertically from one of its sides.

The following will describe the fixed version of the invention. The metal cabinet is mounted on a chassis. The front side is an elongated rectangle with the largest sides perpendicular to the ground. The grill basket has at least two projections on one of its sides that allow it to be supported within the cabinet, with one projection located at either extreme of the side. When the grill basket is inserted into the cabinet these projections are introduced into at least two guides, attached to the top of the inside of the cabinet, that are L-shaped and are placed in opposing positions. The guide holds the projections when the grill basket is slid into the cabinet leaving the grill basket hanging in a vertical position, parallel with the sides where the heat is produced. Beneath the grill basket within the frame there is a drawer-shaped receptacle where the oils and fats are collected. This drawer can be removed and its contents emptied whenever necessary.

The invention allows various methods of heating the food to be used. Regardless of the heat source, it is always located in the largest sides of the cabinet. If charcoal is used it is placed within the cabinet on trays located at the bottom of the cabinet on either side of the grill basket. The front side can be opened to allow air to enter and smoke to exit and the heat to spread around the walls. The heat can also be supplied by electricity using halogen or quartz lamps or conventional heaters placed around the sides within the cabinet. In this case, a power switch is also included along with a thermostat. A timer can also be added to control the temperature and a water vaporiser to control the required humidity. Gas can also be used as a heat source with the burners located on the cabinet's sidewalls and a gas regulator also included, preferably with piezoelectric ignition. When either gas or electricity is used the front side is kept closed presenting a vertical slot for the introduction of the grill basket.

As the heat source is located at the sides of the cabinet and the grill basket is vertical and parallel with it the fat and oil released by the food will not come into contact with the heat source and they will be deposited in the drawer located below the grill basket.

The following will describe the portable version of the invention. In this version, one of the largest sides perpendicular to the ground is fixed in a closed position, henceforth referred to as the rear, and the other large side can be opened, henceforth referred to as the front side. The cover forming the front side is joined to the lower side that rests on the ground with a hinge that allows it to be opened. The lateral sides perpendicular to the ground have rectangular slits to facilitate the placing of the grill basket. The cabinet has at least two projections fixed to the upper side projecting downwards, one at either end of the side, they are folded and act to guide and hold the grill basket in a vertical position at the front side. When the front cover is unfolded and lying on the ground it forms a drawer to collect the fat and oil released by the food. The cover can be emptied of its contents whenever necessary.

The mobile version also allows a number of fuel sources to be used. These include charcoal, which can be placed within the rear of the cabinet on a receptacle. A gas burner can also be used with a regulator and preferably with piezoelectric ignition. The heat can also be supplied by electricity using halogen or quartz lamps or conventional heaters placed on the inside of the rear side. In this case, an external power switch is also included. A thermostat and timer can also be added to control the temperature. As an additional element the outside of the upper side can be used as a griddle.

As with the fixed version, because the heat source is not beneath the grill basket and as this is in a vertical position, the fat and oil released by the food will not come into contact with the heat source and it will be deposited in the cover located below the grill basket.

Different types of grill basket can be used within the invention depending on the food to be cooked.

The characteristics and advantages of the invention are more clearly seen in the following detailed description of a preferred embodiment, given in an illustrative and non-limiting manner and with reference to the accompanying figures.

### Brief description of the drawings

Figure 1 shows the invention's general aspect in the fixed version.
Figure 2 shows the guide.
Figure 3 shows the projections from the grill basket.
Figure 4 shows the drawer.
Figure 5 shows the position of the heating elements when the heat source is electricity.
Figure 6 shows the lateral trays and the position of the drawer.
Figure 7 shows the lateral trays.
Figure 8 shows the layout when the heat source is gas.
Figure 9 shows the invention's general aspect in the portable version.
Figure 10 shows the upper side that can be used as a griddle.
Figure 11 shows the position of the heating elements when the heat source is electricity.
Figure 12 shows the location of the tray when charcoal is used.
Figure 13 shows details of the tray containing the charcoal.
Figure 14 shows the layout when the heat source is gas.

### Description of a first preferred embodiment

A detailed description of the preferred embodiments of the present invention is provided below with the help of the attached drawings, wherein the same numerical references are used to design the identical or equivalent parts. Where the parts described in the different preferred embodiments have a functional similarity but a different form or disposition a different numerical reference will be used to give coherence and unity to each preferred embodiment, always taking into account the previously supplied description of the invention.

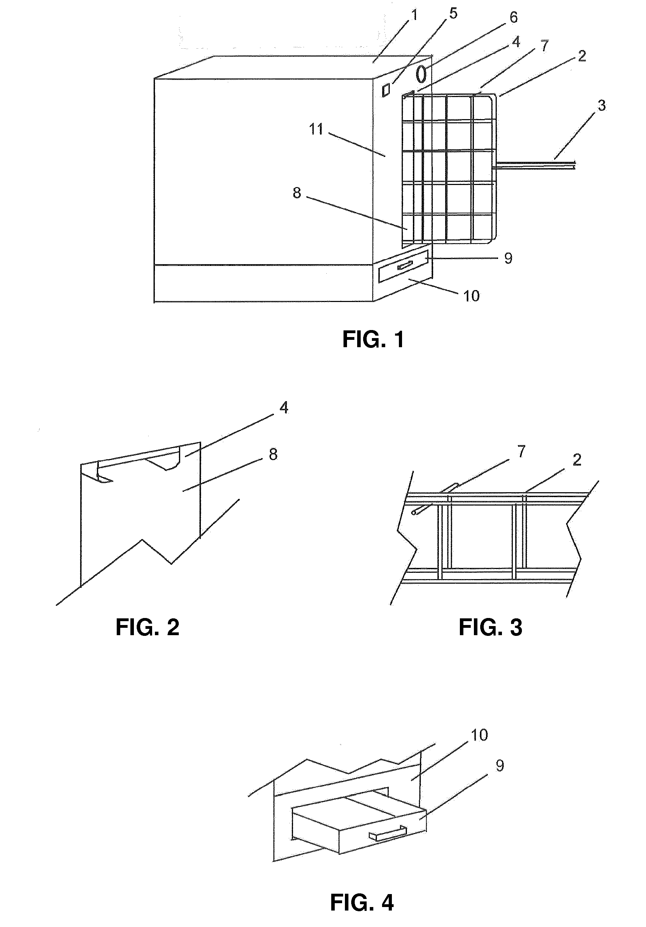

Figure 1 shows an overview of the fixed version of the invention. The cabinet is formed of vertical metal covers (1) mounted on a chassis (10). The grill basket (2) has a handle (3) that allows it to be easily opened and closed and which can be used for carrying it and introducing it into the cabinet. The front side (11) of the cabinet (1) has a long central slot (8) through which the grill basket (2) is inserted into the cabinet. The grill basket (2) has at least two projections (7) on one of its sides, with one projection located at either extreme of the side, that are introduced into a guide (4) attached to the top of the inside of the cabinet (1) that allow the grill basket (2) to be supported when it is slid into the cabinet (1). The heat source is placed within the cabinet (1) on the lateral walls. At the base of the cabinet (1) and within the chassis (10) there is a drawer-shaped receptacle (9) where the oils and fats that fall from the cooking food are collected.

Figure 2 shows the guide (4) that is fixed to the upper part of the cabinet (1), along the inside of its upper side, which holds the projections (7) from the grill basket (2).

Figure 3 shows the projections (7) from the grill basket (2), at least one at the beginning and another at the end of its upper side.

Figure 4 shows the opened drawer (9), which can be removed and emptied whenever necessary.

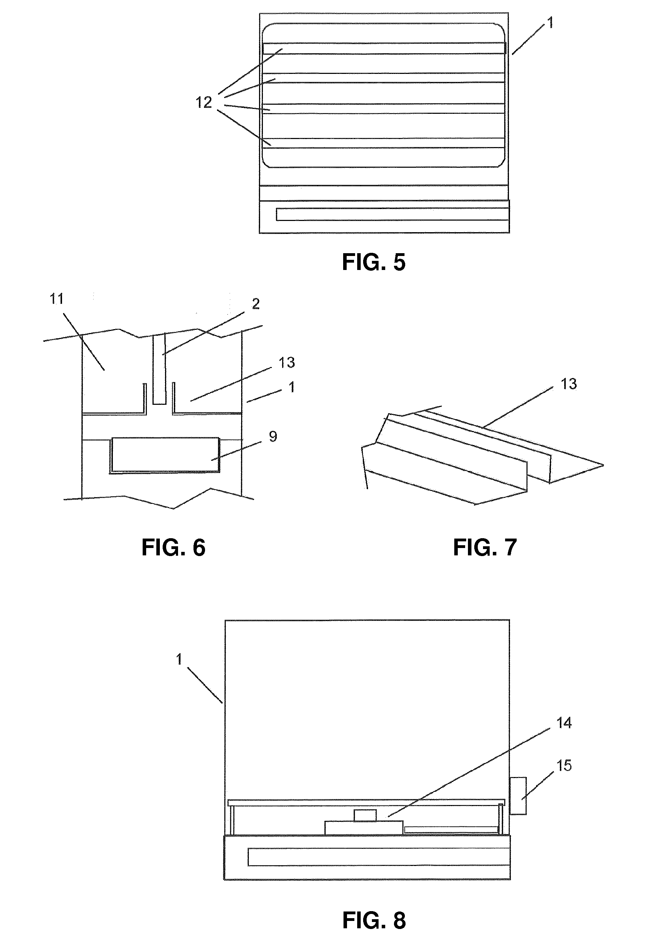

In this preferred embodiment the grill is electrical and for its correct functioning, as shown in Figure 1, it has a power switch (5) and a thermostat (6) to control the temperature. The portable version of this first preferred embodiment is powered by electricity. Figure 5 shows the position of the heating elements (12), in this case resistors, located within the cabinet on either side of the grill basket (2).

### Description of a second preferred embodiment

In this preferred embodiment the fixed grill is fuelled using charcoal. Figure 6 shows the lateral trays (13) where the charcoal is deposited and the position of the drawer (9). The lateral trays (13) are located within the cabinet (1) and are L-shaped to ensure that the fat falling from the grill basket (2) falls vertically without splashing the heat source and falls directly into the drawer (9). When the grill is heated using charcoal the front side (11) is opened to allow air to enter and smoke to exit.

Figure 7 shows the lateral trays (13) from another perspective to give a better view of their shape; they are located along the lateral walls with at least one along each lateral wall.

### Description of a third preferred embodiment

Figure 8 shows a preferred embodiment of the grill that is fuelled by gas, having a regulator (15) to control the gas flow and piezoelectric ignition (14).

### Description of a fourth preferred embodiment

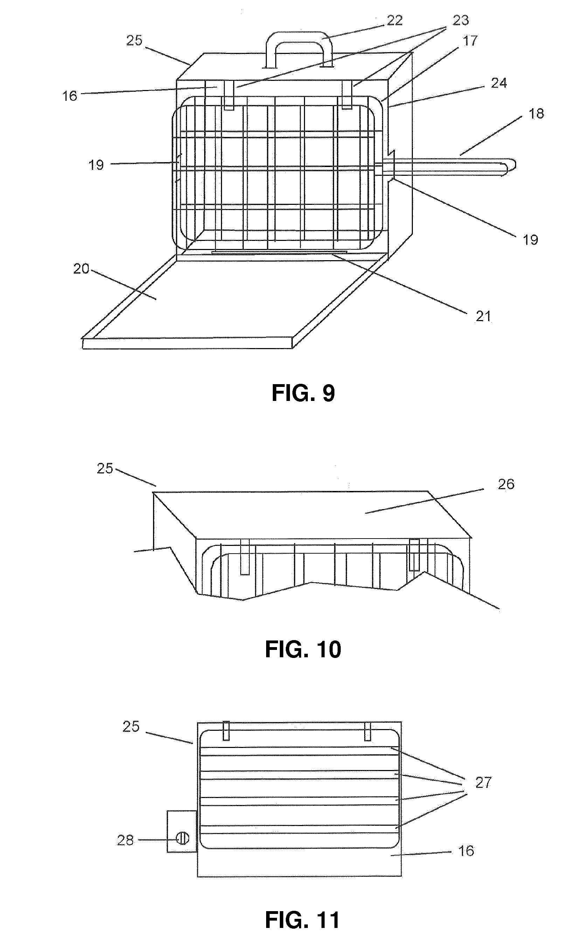

Figure 9 shows an overview of the invention in its portable version. The cabinet (25) is a six-sided polyhedron, with the sides parallel to each other and with the two largest sides perpendicular to the ground, one of them is fixed shut and it is designated the rear side (16), the other is open and it is designated the front side (24) and the grill basket (17) will be inserted over it. The front side cover (20) is joined to the lower side, which rests on the ground, using a hinge (21) allowing it to fold up onto the front side (24). The grill basket (17) has a handle (18) to allow it to open and close easily and also to facilitate its transport and placement. The lateral sides perpendicular to the ground have rectangular slits (19) to facilitate the placing of the grill basket's handle (18), which can be placed to the left or to the right. The cabinet (25) has, in this instance, two guides (23) fixed to the upper side projecting downwards, they are folded and act to guide and hold the grill basket (17) in a vertical position at the front side (24). When the front cover (20) is unfolded and lying on the ground it is located above the side joined by the hinge (21), it therefore forms a drawer to collect the fat and oil released by the food in the grill basket (17). The assembly can be completed with a handle (22) for transport.

Figure 10 shows the exterior of the upper side that can be used as a griddle (26).

The portable version of this fourth preferred embodiment is fuelled using electricity. Figure 11 shows the position of the heating elements (27), in this instance resistors, located within the interior on the rear side (16). In this preferred embodiment the cabinet (25) is fitted with a power switch (28) and, optionally, with a thermostat to control the heat.

### Description of a fifth preferred embodiment

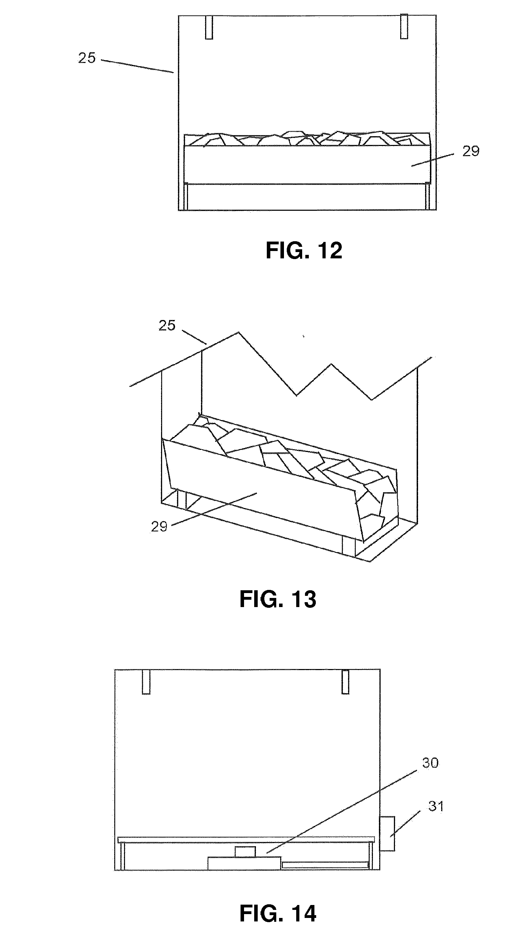

In this preferred embodiment the grill is fuelled using charcoal. Figure 12 shows the arrangement of a tray (29) that contains the charcoal. The tray (29) is located in the lower part of the cabinet (15) over the lower side.

Figure 13 shows the tray (29) containing the charcoal in greater detail; it is located within the cabinet (25) between the four sides that are perpendicular to the ground.

### Description of a sixth preferred embodiment

Figure 14 shows the preferred embodiment where the grill is fuelled by gas. In this case it has a regulator (31) to control the gas and piezoelectric ignition (30).

It should be understood that the invention has been described as an example of the preferred embodiment; it may be susceptible to modifications wherever they do not imply alterations of the essentials of said invention, which may affect such characteristics such as the shape, size or manufacturing materials.

## Claims

1. Vertical grill, **characterized in that** it is formed by a metal cabinet (1, 25), with a polyhedral shape having six sides with the parallel sides equal in size, being the front side (11, 24) the one through which the grill basket (2, 19) is inserted, there being at least two guides (4, 23) fixed to the upper part of the cabinet (1, 25) along the inside of the upper side, there also being a receptacle at the base of the cabinet (1, 25), the grill basket (2, 19) being a lattice with a preferably rectangular shape divided into two parts and of equal size of the largest sides of the cabinet (1, 25), joined along one side by an element similar to a hinge and with a handle (3, 18) on the opposite side, with the heat source inside the cabinet (1, 25).

2. Vertical grill according to claim 1, **characterized in that** the conformation being of a fixed version, the cabinet (1) is mounted on a chassis (10), the grill basket (2) having on its upper side at least two projections (7), at least one at the start and the other at the end of the side, there being a receptacle in the shape of a drawer (9) beneath the cabinet (1) within the chassis (10), and the cabinet (1) having at least two opposing L-shaped guides (4).

3. Vertical grill according to claims 1 and 2, **characterized in that** the conformation being of a fixed version, in the case of heating by electricity, has at least a power switch (5) and a thermostat (6), with the front side of the cabinet (1) having a vertical central slot (8).

4. Vertical grill according to claims 1 and 2, **characterized in that** the conformation being of a fixed version, in the case of heating by charcoal, the front side of the cabinet (1) is open, having lateral trays (11), at least one on each side wall, located within the cabinet (1) with an L-shape.

5. Vertical grill according to claims 1 and 2, **characterized in that** the conformation being of a fixed version, in the case of heating by gas has a regulator (15) and preferably piezoelectric ignition (14), with the front side of the cabinet (1) having a vertical central slot (8).

6. Vertical grill according to claim 1, **characterized in that** the conformation being of a portable version, the front side (24) is open and is one of the larger sides, having a cover (20) joined by a hinge (21) to the lower side that rests on the ground, that folds onto the front side (24), with the grill basket (17) having a handle (18), the cabinet (25) having some rectangular slots (19) located in the lateral sides perpendicular to the ground where the handle (18) fits, with the cabinet (25) also having at least two guides (23) fixed to the upper side pointing down keeping the grill basket (17) in a vertical position, over the front side (24), the cover (20) forming, when unfolded, a receptacle under the cabinet (25), with the grill basket (17) being over the edge joined to the hinge (21), being the external part of the upper side prepared as a griddle (26).

7. Vertical grill according to claims 1 and 6, **characterized in that** the conformation being of a portable version, in the case of heating by electricity, has a series of heating elements (27) installed on the rear side (16) of the cabinet (25) and a power switch (28).

8. Vertical grill according to claims 1 and 6, **characterized in that** the conformation being of a portable version, in the case of heating by charcoal, which is deposited in a receptacle (29) located in the lower part of the cabinet (25) on the lower side.

9. Vertical grill according to claims 1 and 6, **characterized in that** the conformation being of a portable version, in the case of heating by gas, has a regulator (31) and preferably piezoelectric ignition (30).
